# EUROPÄISCHE PATENTSCHRIFT

(11) **EP 1 463 188 B1**
(45) Veröffentlichungstag und Bekanntmachung des Hinweises auf die Patenterteilung: **11.04.2012**
(21) Anmeldenummer: 04003465.4
(22) Anmeldetag: 17.02.2004
(51) Int. Cl.: H02M 3/156, H02M 7/5387

(54) **Schaltungsanordnung, Zusatzmodul und Photovoltaik-System**
Circuit arrangement, accessory module and photovoltaic system
Dispositif, module additif et système photovoltaique

(30) Priorität: 22.03.2003 DE 10312921
(43) Veröffentlichungstag der Anmeldung: 29.09.2004
(73) Patentinhaber: SMA Solar Technology AG, 34266 Niestetal (DE)
(72) Erfinder: Romanski, Heinz-Josef, 36199 Rotenburg/Fulda (DE); Greizer, Frank, 34260 Kaufungen (DE); Bremicker, Sven, 36211 Alheim-Baumbach (DE); Laschinski, Joachim, 34134 Kassel (DE)
(74) Vertreter: Walther, Walther & Hinz GbR

(56) Entgegenhaltungen:
- AU-B2- 747 509
- US-A- 5 482 569
- US-A1- 2002 195 136
- PATENT ABSTRACTS OF JAPAN Bd. 1995, Nr. 05, 30. Juni 1995 (1995-06-30) -& JP 07 044252 A (TOSHIBA CORP), 14. Februar 1995 (1995-02-14)
- PATENT ABSTRACTS OF JAPAN Bd. 2000, Nr. 02, 29. Februar 2000 (2000-02-29) -& JP 11 312022 A (YASKAWA ELECTRIC CORP), 9. November 1999 (1999-11-09)
- PATENT ABSTRACTS OF JAPAN Bd. 1999, Nr. 04, 30. April 1999 (1999-04-30) & JP 11 000579 A (ORIGIN ELECTRIC CO LTD), 6. Januar 1999 (1999-01-06)
- CRAMER G ET AL: "STRING-WECHSELRICHTER MACHEN SOLARSTROM BILLIGER" ELEKTRONIK, WEKA FACHZEITSCHRIFTENVERLAG, POING, DE, Bd. 45, Nr. 18, 3. September 1996 (1996-09-03), Seiten 118,120,122-12, XP000633225 ISSN: 0013-5658

## Beschreibung

Die Erfindung betrifft eine Schaltungsanordnung zur Umwandlung einer von mindestens einem Solargenerator erzeugten Gleichspannung in eine Wechselspannung, wobei die Schaltungsanordnung einen elektrischen Energiespeicher, insbesondere einen Kondensator und eine dem Energiespeicher nachgeschaltete Wechselrichterschaltung umfasst, wobei dem Energiespeicher ein Schaltelement vorgeschaltet sowie die Schaltungsanordnung derart ausgebildet ist, dass bei Überschreiten einer definierten ersten Generatorspannung des Solargenerators das Schaltelement geöffnet wird.

Solaranlagen zur Erzeugung elektrischer Energie bestehen im wesentlichen aus einem Solargenerator und einem Wechselrichter.

Verwendung finden Solargeneratoren aus kristallinen Silizium-Solarzellen und amorphen Silizium-Solarzellen, sogenannte Dünnfilm-Solarzellen. Die Solarzellen werden zu Photovoltaik-Modulen zusammengefasst. Während die erstgenannten Zellen einen relativ guten Wirkungsgrad haben, bieten die Dünnfilm-Solarzellen erhebliche Kostenvorteile.

Es sind Wechselrichter bekannt, die nur für kristalline Silizium-Solarzellen verwendbar sind. Für Dünnfilm-Solarzellen sind sie nicht geeignet. Die Dünnfilm-Solarzellen weisen nämlich eine relativ hohe Leerlaufspannung auf, bzw. sie besitzen ein Spannungsverhältnis von der Leerlaufspannung bei -10°C zur Nennspannung (Vmpp bei + 70°) von z.B. 2,6:1 (z.B. MST-43LV von BP-Solar). Bei kristallinen Silizium-Solarzellen beträgt dieses Verhältnisdagegen z.B. nur 1,8:1 (z.B. BP585 von BP-Solar). Diese Wechselrichter sind vorteilhafter Weise als Stringwechselrichter mit Potentialtrennung ausgeführt, d.h. sie sind mit einen Transformator versehen. Eine Auslegung derartiger Wechselrichter, die eine Vollbrückenschaltung mit einem Niederfrequenz-Transformator aufweisen für Dünnschichtzellen ist insbesondere ungünstig, weil der Wirkungsgrad des Wechselrichters sinkt. Dies ist dadurch zu erklären, dass der Wirkungsgrad des Wechselrichters von der Eingangsspannung (Vmpp) im Arbeitspunkt abhängig ist. Der optimale Arbeitspunkt von Dünnschichtzellen variiert jedoch stark mit dem Alterungszustand und der Temperatur der Zellen. Der Wechselrichter oder ein direkt angeschlossener (Gleichspannungs-) Verbraucher muss damit in einem weiten Spannungsbereich arbeiten, was eine Optimierung des Wirkungsgrads unmöglich macht.

Für Dünnfilm-Solarzellen sind lediglich transformatorlose Stringwechselrichter bekannt, die eine netzpotential-behaftete Vollbrücke mit einem vorgeschalteten Hochsetzsteller besitzen und unter den beschriebenen Betriebsbedingungen einen akzeptablen Wirkungsgrad aufweisen.

Aus der JP 07044252 A ist eine Schaltungsanordnung bekannt, die einen hohen Wirkungsgrad aufweisen soll, indem ein maximaler Stromwert des AC Ausgangsstromes begrenzt wird. Parallel zu einem Solargenerator ist ein Kondensator angeordnet. Die an dem Kondensator vorhandene Spannung dient als DC Spannung für eine Brückenschaltung, die den Gleichstrom in einen Wechselstrom wandelt. An dem Kondensator erfolgt eine Spannungsmessung, wobei der gemessene Spannungswert einer arithmetischen Rechenschaltung zugeführt wird. Diese steuert ein Schaltelement, das im Verbindungspfad zwischen dem Kondensator und dem Generator angeordnet ist. Durch Öffnen des Schalters wird der Stromfluss unterbrochen, so dass die Kondensatorspannung sinkt. Ein Öffnen des Schalters erfolgt bei einem definierten Grenzwert. Durch diese Schaltungsanordnung soll es möglich sein, die Schaltelemente in der Halbleiterbrücke mit niedriger Sperrspannungsfestigkeit zu setzen. Zudem soll der Wirkungsgrad der Schaltung verbessert werden. Diese Schaltung ist jedoch nur für einen Generatortypen ausgelegt. Wird ein Generator mit kristallinen Zellen durch einen mit amorphen Zellen ausgetauscht, was grundsätzlich durch diese Schaltung möglich ist, sinkt der Wirkungsgrad jedoch, weil die Schaltungsanordnung auf den einzigen Generatortyp optimiert ist.

Die JP 11312022 A offenbart einen Wechselrichter mit einer Brückenschaltung, einem vorgeschalteten Kondensator, einem Generator und einem zwischen dem Solargenerator und dem Kondensator zwischengeschalteten Schaltelement. Dieses Schaltelement steht im Zusammenhang mit einem durch zwei Widerstände gebildeten Spannungsteiler. Durch den Spannungsteiler wird die Eingangsspannung des Wechselrichters reduziert.

In der AU 199852151 B2 ist eine Photovoltaikmodulanordnung bekannt, bei der unterschiedliche Modulgruppen von Modulen eingesetzt werden können. Es können kristalline Zellen oder amorphe Zellen eingesetzt werden.

Der Erfindung liegt die Aufgabe zugrunde, eine kostengünstige Lösung zu finden, mit der eine Verwendung von handelsüblichen Wechselrichtern mit Potentialtrennung oder von elektrischen Verbrauchern oder elektrischen Schaltungen auch für Dünnfilm-Solarzellen bei einem verbesserten Wirkungsgrad möglich ist.

Diese Aufgabe wird dadurch gelöst, dass bei Unterschreiten der ersten Generatorspannung oder einer zweiten, im Verhältnis zur ersten Generatorspannung geringeren, Generatorspannung das Schaltelement eingeschaltet wird, so dass der für die Wechselrichterschaltung mögliche Spannungsbereich erhöht wird und dass das Schaltelement derart getaktet wird, dass bei einem Spannungsverhältnis zwischen einer Leerlaufspannung des Generators zu einer Nenn-Betriebsspannung von etwa 2,2:1 bis etwa 3:1 das für die Wechselrichterschaltung maßgebliche Spannungsverhältnis auf einen Wert von etwa 1,5:1 bis etwa 2,0:1 reduziert wird, wobei einerseits die Höhe der Spannung des Generators unmittelbar nach deren Einschaltung durch mehrere Schaltzyklen durch das Schaltelement in Verbindung mit dem aufzuladenden Kondensator auf eine dem Wechselrichter erträgliche Spannung reduziert wird und andererseits bei ausreichender Last die Generatorspannung aufgrund der Solarzellenkennlinie automatisch unter die erste Generatorspannung sinkt, so dass das Schaltelement dauerhaft geschlossen bleibt.

Durch die wirksame Erhöhung des Spannungsbereiches können handelsübliche Wechselrichter z.B. der Baureihe Sunny Boy, 700,1100E, 2500 oder 3000 bei Verwendung von Dünnfilm-Solarzellen ohne signifikante Reduzierung des Wirkungsgrades eingesetzt werden. Einerseits schützt das Schaltelement den Wechselrichter, wenn eine hohe Leerlaufspannung entsteht, d.h. wenn an dem Wechselrichter keine oder eine sehr geringe Last eingeschaltet ist. Bei Leerlauf wird ein angeschlossenes Photovoltaik-Modul praktisch vom Wechselrichter abgekoppelt. Andererseits wird durch die sehr geringe Verlustleistung des Schaltelementes im eingeschalteten Zustand, insbesondere bei Verwendung eines MOSFET-Transistors, der Wirkungsgrad praktisch nicht negativ beeinflusst. Der Wirkungsgrad des Wechselrichters sinkt lediglich um z.B. 0,05%, was praktisch vernachlässigbar ist. Die Schaltungsanordnung ist insbesondere derart ausgebildet, dass eine Kennlinienanpassung von einer Dünnfilm-Solarzellenkennlinie auf eine Solarzellenkennlinie mit kristallinen Solarzellen erfolgt.

Auch eine relativ hohe Leerlaufspannung des Generators, die sich durch eine niedrige Zelltemperatur ergibt, ist für den nachgeschalteten Wechselrichter unkritisch.

In einer vorteilhaften Weiterbildung der Erfindung ist vorgesehen, dass der durch das Schaltelement begrenzte Spannungsbereich kleiner oder gleich einem zulässigen - von einem Hersteller des Wechselrichters angegebenen - Eingangsspannungsbereich der Wechselrichterschaltung ist. Hierbei wird der Spannungsbereich des Wechselrichters voll ausgeschöpft. Der Wirkungsgrad ist dabei optimal.

Wenn erste Mittel zur Erfassung einer Eingangsspannung der Wechselrichterschaltung vorhanden sind, die derart geschaltet sind, dass sie beim Überschreiten einer Schwellenspannung ein Öffnen des Schaltelementes bewirken, dann ist in vorteilhafter Weise möglich, eine Kondensatorspannung eines Wechselrichterkondensators (Energiespeicher) unmittelbar zu überwachen, wobei diese Spannung bei geschlossenem Schaltelement etwa die Generatorspannung ist.

Damit Durchlassverluste des Schaltelementes gering gehalten werden und eine Verwendung eines Schaltelementes mit geringer Spannungsfestigkeit möglich ist sowie ein Einschaltschutz bei einem entladenem Kondensator, insbesondere Elektrolytkondensator, gegeben ist, sind zweckmäßigerweise Mittel zur Erfassung einer an dem Schaltelement anliegenden Spannung vorhanden, die derart geschaltet sind, dass sie bei Überschreiten eines bestimmten Spannungswertes, ein Schließen des Schaltelementes bewirken. Das Schaltelement wird so bei entladenen Kondensator - insbesondere Elektrolytkondensator - vor einer zu hohen Sperrspannung geschützt.

Von besonderem Vorteil ist es, wenn ein Zusatzmodul eingesetzt wird, das mit einem eingangseitigen elektrischen Anschluss für mindestens einen Solargenerator und einem ausgangsseitigen elektrischen Anschluss für ein Wechselrichtermodul versehen ist, wobei das Schaltelement in dem Zusatzmodul und der Energiespeicher in dem Wechselrichtermodul untergebracht sind. Das Zusatzmodul kann sowohl als externes Modul als auch als internes Modul ausgebildet sein, wobei beim internen Modul vorzugsweise alle Anschlüsse als Steckanschlüsse ausgeführt sind und beim externen Modul vorzugsweise Lötanschlüsse vorhanden sind, die über im Wechselrichter angeordnete Anschlussleitungen mit Steckkontakten, insbesondere vorhandene Steckbuchsen des Wechselrichters, verbunden sind. Diese Maßnahme erlaubt eine schnelle und einfache Umrüstung eines handelsüblichen Wechselrichters für verschiedene Solargeneratoren bzw. für verschiedene Generatorkennlinien.

Weitere Vorteile sind in den Unteransprüchen genannt.

Es zeigt:
- Fig. 1: eine erfindungsgemäße Schaltungsanordnung mit einer Zusatzschaltung,
- Fig. 2: einen Lade- und Entladevorgang eines Wechselrichter-Kondensators und
- Fig. 3: einen Kennlinienvergleich eines Solargenerators mit oder ohne Zusatzschaltung.

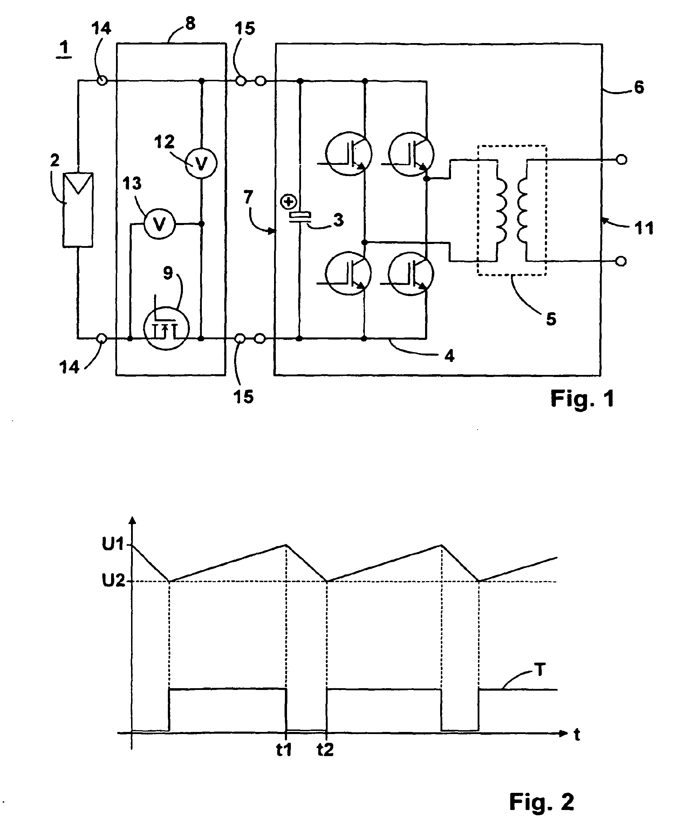

Fig. 1 zeigt eine bevorzugte Ausführungsform einer erfindungsgemäßen Schaltungsanordnung 1.

Die Schaltungsanordnung 1 dient zur Umwandlung einer von einem Dünnfilm-Solarzellengenerator bzw. einem Photovoltaikmodul 2 (PV-Modul) erzeugten Gleichspannung in eine Wechselspannung von z.B. 50 Hz. Die Schaltungsanordnung 1 umfasst einen elektrischen Energiespeicher, insbesondere einen Kondensator 3, vorzugsweise ein Elektrolytkondensator, und eine dem Kondensator 2 nachgeschaltete Wechselrichterschaltung 4 mit einem Niederfrequenz-Transformator 5. Der Kondensator 3, die Wechselrichterschaltung 4 und der Transformator 5 sind in einem handelsüblichen Wechselrichtermodul 6 mit Potentialtrennung untergebracht, das an sich für kristalline Solarzellen ausgelegt ist.

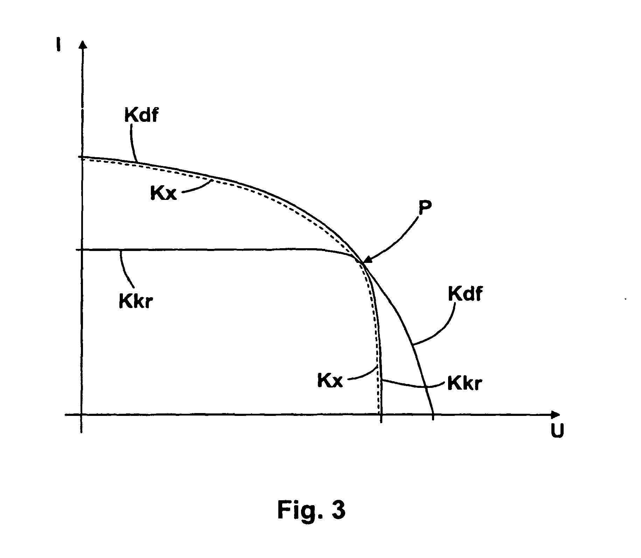

Zwischen einem Generatoreingang 7 des Wechselrichtermoduls 6 und dem PV-Modul 2 ist eine Zusatzschaltung bzw. ein Zusatzmodul 8 zur Annäherung einer Dünnfilm-Solarzellenkennlinie (vgl. Kdf in Fig. 3) des PV-Moduls 2 an eine Generatorkennlinie (vgl. Kkr in Fig. 3) mit kristallinen Solarzellen, für die das Wechselrichtermodul 6 einen optimalen Wirkungsgrad aufweist, vorhanden. In Fig. 3 ist der Arbeitspunkt maximaler Leistung mit P gekennzeichnet, wobei dieser für Dünnfilmzellen und kristalline Zellen (Kdf, Kkr) identisch gewählt ist.

Erfindungsgemäß ist dem Kondensator 3 ein Schaltelement 9, vorzugsweise ein MOSFET-Transistor, vorgeschaltet. Die Schaltungsanordnung 1 ist derart ausgebildet, dass bei Überschreiten einer definierten ersten Generatorspannung U1 (Fig. 2) des PV-Moduls 2 (Solargenerator) der Transistor 9 geöffnet, d.h. hochohmig wird, und bei Unterschreiten der ersten Generatorspannung U1 bzw. einer zweiten, kleineren Generatorspannung U2 der Transistor 9 eingeschaltet wird, wie anhand der unteren Taktimpulse T veranschaulicht wird. Dadurch wird bei automatischer Kennlinienanpassung der für die Wechselrichterschaltung 4 mögliche Spannungsbereich erhöht, wie Fig. 3 veranschaulicht, wobei Kdf die Kennlinie ohne Zusatzschaltung und Kx die Kennlinie mit Zusatzschaltung ist . Die Kennlinie Kx entspricht im oberen Spannungsbereich etwa der Kennlinie Kkr von kristallinen Zellen.

Der Kern der Erfindung besteht demzufolge darin, dass die Höhe der Spannung des Generators unmittelbar nach deren Einschaltung durch mehrere Schaltzyklen durch den Transistor in Verbindung mit dem aufzuladenden Kondensator auf eine dem Wechselrichter erträgliche Spannung reduziert wird.

In Fig. 2 (oberes Signal) ist der Spannungsverlauf am Kondensator 3 dargestellt. Bei zu hoher Leerlaufspannung des PV-Moduls 2, d.h. bei hoher Sonneneinstrahlung und ausgeschalteter bzw. geringer Last am Ausgang 11 des Wechselrichtermoduls 6 und insbesondere kaltem Zellenzustand, wird der Transistor 9 geöffnet (vgl. Zeitpunkt t1), wobei der Kondensator 3 vorher (zumindest teilweise) geladen war. Der Kondensator 3 wird durch die Eigenverluste des Wechselrichters und/oder durch einen angeschlossenen nicht dargestellten Verbraucher (Last) entladen, wie die abfallende Rampe veranschaulicht. Unterschreitet die Kondensatorspannung einen unteren Wert U2 nach dem Prinzip einer Zweipunktregelung, dann wird der Kondensator 3 wieder aufgeladen, wie anhand der steigenden Rampe zu sehen ist. Die sich ergebende Pulsfrequenz wird im wesentlichen von der Eigenkapazität des Wechselrichters und der Leistung des PV-Moduls 2 bestimmt.

Wenn jedoch eine ausreichende Last angeschlossen ist, dann sinkt aufgrund der Solarzellenkennlinie (vgl. Fig. 3) die Generatorspannung automatisch unter die Schaltschwelle U1, so dass der Transistor 9 in diesem Fall dauerhaft geschlossen bleibt, d.h. er verbindet das PV-Modul 2.

Vorzugsweise wird die Generatorspannung unmittelbar am Kondensator 3 gemessen. Insbesondere sind erste Mittel 12, insbesondere eine Messschaltung, zur Erfassung einer Eingangsspannung der Wechselrichterschaltung 4 vorhanden. Sie sind derart geschaltet, (vorzugsweise parallel zum Kondensator 3), dass sie beim Überschreiten der Schwellenspannung U1 ein Öffnen des Transistors 9 bewirken. Bei Unterschreiten der Spannung U2 bewirken sie ein Schließen des Transistors 9.

Dies bedeutet, dass eine zu hohe Leerlaufspannung des PV-Moduls von z.B. 750 Volt für die erste Zeit von Beginn einer Inbetriebnahme bis zu einem Dauerbetrieb auf einen für den Wechselrichter zuträglichen Wert von z.B. 600 Volt begrenzt wird, wobei der Kondensator 3 bei eingeschalteten Transistor 9 auf 600 Volt aufgeladen wird. Im Dauerbetrieb verschiebt sich der Arbeitspunkt in der Kennlinie (Fig. 3), d.h. die Generatorspannung wird kleiner (unterhalb von 600 Volt), so dass der Transistor 9 eingeschaltet bleiben kann.

Durch den Transistor 9 wird der tatsächliche Spannungsbereich des PV-Moduls 2 kleiner oder gleich einem zulässigen, herstellerbedingten Eingangsspannungsbereich der Wechselrichterschaltung (z.B. 0 bis 600 Volt) bzw. kleiner/gleich einem zulässigen Spannungswert des Kondensators 3. Die Leerlaufspannung nach der Solarzellenkennlinie Kdf ist dabei größer als die zulässige Eingangsspannung des Wechselrichtermoduls 6. Ohne Zusatzschaltung bzw. ohne Zusatzmodul 8 wäre der Bereich z.B. von 0 bis 750 Volt für das Wechselrichtermodul 6 unzulässig hoch. Da eine Überspannung von z.B. 750 Volt nur im Leerlauf eintritt, können die sich ergebende Pulsfrequenz (vgl. Fig. 2) und damit die Schaltverluste des Transistors 9 klein bleiben.

Eine Bemessung der Schaltung erfolgt derart, dass bei einem Spannungsverhältnis zwischen einer Leerlaufspannung (Voc, open circuit, d.h. bei offenen Schaltkreis) des Generators zu einer optimalen Betriebsspannung (Vmpp bei Pmax) von etwa 2,2:1 bis etwa 3:1, vorzugsweise 2,6:1, das für die Wechselrichterschaltung maßgebliche Spannungsverhältnis auf einen Wert von etwa 1,5:1 bis etwa 2,0:1, insbesondere etwa 1,8:1 reduziert wird. Wechselrichter mit einem Verhältnis von 1,8:1 sind als handelsübliche Module mit Potentialtrennung erhältlich, wobei Dünnschicht-Solarzellen im Dauerbetrieb ein typisches Verhältnis von 2,6:1 aufweisen.

Damit im Leerlauffall bei geöffnetem, d. h. hochohmigem Transistor 9 (geöffneter Schalter) dieser nicht mit einer zu hohen Sperrspannung beaufschlagt wird bzw. ein Transistortyp mit kleinem Widerstand (RDS(on)) und damit auch mit geringer Spannungsfestigkeit (z.B. 200 Volt) einsetzbar ist, ist vorzugsweise eine Überwachung der Sperrspannung des Transistors 9 vorteilhaft. Dabei sind zweite Mittel 13, insbesondere eine Messschaltung, zur Erfassung der an dem Transistor 9 anliegenden Spannung vorhanden. Sie sind derart geschaltet, dass sie bei Überschreiten eines bestimmten Spannungswertes, vorzugsweise einem von der Spannungsfestigkeit des Transistors 9 definierten Wertes zuzüglich eines Sicherheitszuschlags, ein Schließen des Transistors 9, d.h. einen leitfähigen Zustand bewirken und/oder sicherstellen, dass der Transistor 9 geschlossen, d.h. niederohmig, bleibt. Die Mittel 13 bewirken daher einen Einschaltschutz bei entladenem Kondensator 3.

Der Transistor 9 schließt, d.h. wird niederohmig, beispielsweise wenn an ihm im Sperrzustand eine Spannung von 150 Volt anliegt, wobei seine zulässige Sperrspannung 200 Volt beträgt (150 Volt plus 50 Volt Sicherheitszuschlag), wodurch er vor unzulässigen Sperrspannungen geschützt ist.

Ist der Kondensator 3 bei Inbetriebnahme leer, dann wird ohnehin wegen des hohen Ladestromes keine Leerlaufspannung von über 600 Volt erreicht, so dass der Einschaltschutz (geschlossener Transistor 9 durch Mittel 13) wirken kann. Ist der Kondensator 3 auf einen Wert von 600 Volt aufgeladen, dann wirkt im Leerlauf der Leelauf-Spannungsschutz (Mittel 12) und der Transistor 9 wird gemäß Fig. 2 getaktet bzw. gepulst. Die Mittel 12 und 13 steuern unmittelbar den Transistor 9.

Der Transistor 9 ist zwar in Reihe geschaltet, ein Kurzschließen des PV-Moduls über z.B. eine Schutzdiode oder andere Anordnungen, z.B. die Verwendung eines Tiefsetzstellers sind aber grundsätzlich möglich und sind gleichwirkende Ausführungsformen.

Besonders vorteilhaft ist es, wie Fig. 1 veranschaulicht, wenn das Zusatzmodul 8 mit eingangseitigen elektrischen Anschlüssen 14 für das PV-Modul 2 und ausgangsseitigen elektrischen Anschlüssen 15 für das Wechselrichtermodul 6 versehen ist, wobei das Zusatzmodul 8 mit Steck- und/oder Lötanschlüssen 14, 15 und als internes oder externes Zusatzmodul 8 ausgeführt ist.

Das Schaltelement 9 kann grundsätzlich ein beliebiger Halbleiterschalter sein.

Anstelle eines Wechselrichters kann ein elektrischer Verbraucher oder eine andere Schaltung, z.B. ein Gleichspannungswandler, angeschlossen werden. Hierbei erfolgt ebenfalls eine Senkung der Leerlaufspannung bzw. eine Optimierung des Wirkungsgrades. Hierbei können die beschriebenen Maßnahmen analog angewendet werden.

## Patentansprüche

1. Schaltungsanordnung (1) zur Umwandlung einer von mindestens einem Solargenerator (2) erzeugten Gleichspannung in eine Wechselspannung, wobei die Schaltungsanordnung (1) einen elektrischen Energiespeicher (3), insbesondere einen Kondensator, und eine dem Energiespeicher (3) nachgeschaltete Wechselrichterschaltung (4) umfasst, wobei dem Energiespeicher (3) ein Schaltelement (9) vorgeschaltet sowie die Schaltungsanordnung (1) derart ausgebildet ist, dass bei Überschreiten einer definierten ersten Generatorspannung (U1) des Solargenerators das Schaltelement geöffnet wird
**dadurch gekennzeichnet, dass** bei Unterschreiten der ersten Generatorspannung oder einer zweiten, im Verhältnis zur ersten Generatorspannung geringeren, Generatorspannung (U2) das Schaltelement(9) eingeschaltet wird, so dass der für die Wechselrichterschaltung (4) mögliche Eingangsspannungsbereich erhöht wird und dass das Schaltelement (9) derart getaktet wird, dass bei einem Spannungsverhältnis zwischen einer Leerlaufspannung des Generators zu einer Nenn-Betriebsspannung von etwa 2,2:1 bis etwa 3:1 das für die Wechselrichterschaltung (4) maßgebliche Spannungsverhältnis auf einen Wert von etwa 1,5:1 bis etwa 2,0:1 reduziert wird, wobei einerseits die Höhe der Spannung des Generators unmittelbar nach deren Einschaltung durch mehrere Schaltzyklen durch das Schaltelement (9) in Verbindung mit dem aufzuladenden Kondensator auf eine dem Wechselrichter erträgliche Spannung reduziert wird und andererseits bei ausreichender Last die Generatorspannung aufgrund der Solarzellenkennlinie automatisch unter die erste Generatorspannung (U1) sinkt , so dass das Schaltelement dauerhaft geschlossen bleibt.

2. Schaltungsanordnung nach Anspruch 1,
**dadurch gekennzeichnet,**
**dass** der durch das Schaltelement (9) begrenzte Spannungsbereich kleiner oder gleich einem zulässigen Eingangsspannungsbereich der Wechselrichterschaltung (4) ist.

3. Schaltungsanordnung nach Anspruch 1 oder 2,
**dadurch gekennzeichnet,**
**dass** das Schaltelement (9) derart getaktet wird, dass bei einem Spannungsverhältnis zwischen einer Leerlaufspannung des Generators zu einer Nenn-Betriebsspannung von etwa 2,8:1, das für die Wechselrichterschaltung (4) maßgebliche Spannungsverhältnis auf einen Wert von etwa 1,8:1 reduziert wird.

4. Schaltungsanordnung nach einem der vorhergehenden Ansprüche,
**dadurch gekennzeichnet,**
**dass** Mittel (12) zur Erfassung einer Eingangsspannung der Wechselrichterschaltung (4) vorhanden sind, die derart geschaltet sind, dass sie beim Überschreiten einer Schwellenspannung (U1) ein Öffnen des Schaltelementes (9) bewirken.

5. Schaltungsanordnung nach einem der vorhergehenden Ansprüche,
**dadurch gekennzeichnet,**
**dass** Mittel (13) zur Erfassung einer an dem Schaltelement (9) anliegenden Spannung vorhanden sind, die derart geschaltet sind, dass sie bei Überschreiten eines bestimmten Spannungswertes, vorzugsweise einem von der Spannungsfestigkeit des Schaltelementes (9) definierten Wertes zuzüglich eines Sicherheitszuschlags von vorzugsweise etwa 25%, ein Schließen des Schaltelementes (9) bewirken.

6. Schaltungsanordnung nach einem der vorhergehenden Ansprüche,
**dadurch gekennzeichnet,**
**dass** das Schaltelement (9) der Wechselrichterschaltung (4) in Reihe vorgeschaltet ist.

7. Schaltungsanordnung nach einem der vorhergehenden Ansprüche,
**dadurch gekennzeichnet,**
**dass** das Schaltelement (9) ein MOSFET-Transistor ist.

8. Schaltungsanordnung nach einem der vorhergehenden Ansprüche,
**dadurch gekennzeichnet,**
**dass** die Schaltung in einem Zusatzmodul integriert ist mit mindestens einem eingangseitigen elektrischen Anschluss (14) für mindestens einen Solargenerator (2) und mindestens einem ausgangsseitigen elektrischen Anschluss (15) für einen Wechselrichtermodul (6), wobei das Schaltelement (9) in dem Zusatzmodul (8) und der Energiespeicher (3) in dem Wechselrichtermodul (6) untergebracht sind.

9. Verwendung einer Schaltungsanordnung nach einem der vorhergehenden Ansprüche in einem Solaranlagen-System und mit mindestens einem Dünnschicht-Photovoltaikgeneratormodul (2).

10. Verwendung nach Anspruch 9,
**dadurch gekennzeichnet,**
**dass** das Wechselrichtermodul (6) elektrisch für einen kristallinen Photovoltaikgenerator dimensioniert ist und als Stringwechselrichter mit einem Transformator zur Potentialtrennung ausgebildet ist.

## Claims

1. Circuit arrangement (1) for converting a direct voltage generated by at least one solar generator (2) into an alternating voltage, wherein the circuit arrangement (1) comprises an electrical energy storage device (3), particularly a capacitor, and a direct-current/alternating-current converter circuit (4) connected downstream of the energy storage device (3), wherein a switching element (9) is connected upstream of the energy storage device and the circuit arrangement (1) is configured to open the switching element when a defined first generator voltage (U1) of the solar generator is exceeded, **characterised in that**
the switching element (9) is switched on when the first generator voltage or a second generator voltage (U2) being smaller than the first generator voltage is undershot so that the input voltage range for the direct-current/alternating-current converter circuit (4) is increased and that the switching element (9) is clocked in such a manner that in the case of a voltage ratio of an open voltage of the generator to a nominal operating voltage of approximately 2.2:1 to approximately 3:1 the voltage ratio associated with the direct-current/alternating-current converter circuit (4) is reduced to a value of approximately 1.5:1 to approximately 2.0:1, wherein on the one hand the voltage of the generator is reduced by the switching element (9) directly after switching-on thereof through several switching cycles in connection with the capacitor to be charged to a voltage permissable to the direct-current/alternating-current converter and on the other hand in the case of a sufficient load the generator voltage is automatically lowered according to the solar cell characteristic curve to fall below the first generator voltage (U1) so that the switching element remains permanently closed.

2. Circuit arrangement according to claim 1, **characterised in that** the voltage range limited by the switching element (9) is smaller than or equal to a permissible input voltage range of the direct-current/alternating-current converter circuit (4).

3. Circuit arrangement according to claim 1 or 2, **characterised in that** the switching element (9) is clocked in such a manner that in the case of a voltage ratio of an open voltage of the generator to a nominal operating voltage of approximately 2.8:1 the voltage ratio associated with the direct-current/alternating-current converter circuit (4) is reduced to a value of approximately 1.8:1.

4. Circuit arrangement according to any one of the preceding claims, **characterised in that** the circuit arrangement comprises means (12) for detection of an input voltage of the direct-current/alternating-current converter circuit (4), which are switched in such a manner that they cause opening of the switching element (9) when a threshold voltage (U1) is exceeded.

5. Circuit arrangement according to any one of the preceding claims, **characterised in that** the circuit arrangement comprises means (13) for detection of a voltage applied to the switching element (9), the means being configured to cause closing of the switching element (9) when a predetermined voltage value is exceeded, the value being preferably defined by a voltage rating of the switching element (9) including a safety margin of preferably approximately 25%.

6. Circuit arrangement according to any one of the preceding claims, **characterised in that** the switching element (9) is connected upstream of and in series to the direct-current/alternating-current converter circuit (4).

7. Circuit arrangement according to any one of the preceding claims, **characterised in that** the switching element (9) is a MOSFET transistor.

8. Circuit arrangement according to any one of the preceding claims, **characterised in that** the circuit is integrated in an auxiliary module with at least one input-side electrical connection (14) for at least one solar generator (2) and at least one output-side electrical connection (15) for a direct-current/alternating-current converter module (6), wherein the switching element (9) is accommodated in the auxiliary module (8) and the energy storage device (3) is accommodated in the direct-current/alternating-current converter module (6).

9. Use of a circuit arrangement according to any one of the preceding claims in a solar installation system and with at least one thin-film photovoltaic generator module (2).

10. Use according to claim 9, **characterised in that** the direct-current/alternating-current converter module (6) is electrically dimensioned for a crystalline photovoltaic generator and is configured as a string direct-current/alternating-current converter with a transformer for galvanic separation.

## Revendications

1. Circuit (1) pour transformer une tension continue produite par au moins un générateur solaire (2) en une tension alternative, ledit circuit (1) comprenant un accumulateur d'énergie électrique (3), en particulier un condensateur, et un circuit onduleur (4) connecté en aval de l'accumulateur d'énergie (3), dans lequel un élément commutateur (9) est connecté en amont de l'accumulateur d'énergie (3) et le circuit (1) étant conçu de manière que l'élément commutateur s'ouvre en cas de dépassement d'une première tension définie (U1) du générateur solaire,
**caractérisé en ce que**, en cas de dépassement vers le bas de la première ou d'une deuxième tension de générateur (U2), diminuée par rapport à la première tension de générateur, l'élément commutateur (9) se ferme, de sorte que la plage de tension d'entrée qui est possible pour le circuit onduleur (4) est relevée, et **en ce que** l'élément commutateur (9) est synchronisé de telle manière qu'en présence d'un rapport de tension entre la tension de marche à vide du générateur et une tension de travail nominale d'environ 2,2:1 à environ 3:1, le rapport de tension déterminant pour le circuit onduleur (4) est ramené d'environ 1,5:1 à environ 2,0:1, et qu'alors, d'une part, le niveau de la tension de générateur est ramené à une tension supportable pour l'onduleur aussitôt après sa mise en circuit, par plusieurs cycles de commutation (9) en liaison avec le condensateur qu'il s'agit de charger et que, d'autre part, en présence d'une charge suffisante, la tension de générateur tombe automatiquement au-dessous de la première tension de générateur (U1), de sorte que l'élément commutateur reste durablement fermé.

2. Circuit selon la revendication 1,
**caractérisé en ce que**
la plage de tension limitée par l'élément commutateur (9) est inférieure ou égale à une plage de tension d'entrée admissible du circuit onduleur (4).

3. Circuit selon la revendication 1 ou 2,
**caractérisé en ce que**
l'élément commutateur (9) est synchronisé de telle manière qu'en présence d'un rapport de tension compris entre une tension de marche à vide du générateur et une tension de service nominale d'environ 2,8:1, le rapport de tension déterminant pour le circuit onduleur (4) est ramené à une valeur d'environ 1,8:1.

4. Circuit selon l'une des revendications précédentes,
**caractérisé en ce que**
il comporte des moyens (12) pour l'acquisition de la tension d'entrée du circuit onduleur (4) qui sont connectés de telle manière qu'en cas de dépassement d'une tension seuil (U1) ils provoquent l'ouverture de l'élément commutateur (9).

5. Circuit selon l'une des revendications précédentes,
**caractérisé en ce que**
il comporte des moyens (13) pour l'acquisition d'une tension appliquée à l'élément commutateur (9), qui sont connectés de telle manière qu'en cas de dépassement d'une certaine valeur de tension, de préférence, d'une valeur définie par la résistance au claquage de l'élément commutateur (9) majorée d'une marge de sécurité qui est de préférence d'environ 25%, ils provoquent la fermeture de l'élément commutateur (9).

6. Circuit selon l'une des revendications précédentes,
**caractérisé en ce que**
l'élément commutateur (9) du circuit onduleur (4) est connecté en série.

7. Circuit selon l'une des revendications précédentes,
**caractérisé en ce que**
l'élément commutateur (9) est un transistor MOSFET.

8. Circuit selon l'une des revendications précédentes,
**caractérisé en ce que**
le circuit est intégré dans un module auxiliaire comprenant au moins une connexion électrique d'entrée (14) pour au moins un générateur solaire (2) et au moins une connexion électrique côté sortie (15) pour un module onduleur (6), l'élément commutateur (9) étant contenu dans le module auxiliaire (8) et l'accumulateur d'énergie (3) dans le module onduleur (6).

9. Utilisation d'un circuit selon l'une des revendications précédentes dans un système d'installation solaire et comprenant au moins un module générateur photovoltaïque à couche mince (2).

10. Utilisation selon la revendication 9,
**caractérisée en ce que**
le module onduleur (6) est dimensionné électriquement pour un générateur photovoltaïque cristallin et est réalisé sous la forme d'un onduleur en chaîne comportant un transformateur pour l'isolation du potentiel.
